**Europäisches Patentamt**

**European Patent Office**

**Office européen des brevets**

(19)

(11) Veröffentlichungsnummer: **0 046 223**
**A1**

## (12) EUROPÄISCHE PATENTANMELDUNG

(21) Anmeldenummer: **81105968.2**

(22) Anmeldetag: **29.07.81**

(51) Int. Cl.³: **F 16 L 37/00,** F 16 B 2/00,
F 16 J 13/00

(30) Priorität: **20.08.80 DE 3031314**

(43) Veröffentlichungstag der Anmeldung: **24.02.82**
**Patentblatt 82/8**

(84) Benannte Vertragsstaaten: **AT BE CH DE FR GB IT LI NL
SE**

(71) Anmelder: **Schaefer, Rudolf, Brauerstrasse 35,
D-4100 Duisburg 1 (DE)**

(72) Erfinder: **Schaefer, Rudolf, Brauerstrasse 35,
D-4100 Duisburg 1 (DE)**

(74) Vertreter: **Patentanwaltsbüro Cohausz & Florack,
Postfach 14 01 47, D-4000 Düsseldorf 1 (DE)**

(54) **Spannverbindung für Rohre.**

(57) Die Erfindung betrifft eine Spannverbindung zur stirnseitigen Befestigung eines Rohres oder Deckels an einem Rohr. Hierzu ist an dem Rohrende oder Deckel außen ein Vorsprung (2, 3) angeformt, an dem ein Verbindungsteil (8) angelenkt ist, das an einem entsprechenden Vorsprung (4, 5) des benachbarten Rohres (1a) oder Deckels durch einen Exzenterbolzen (9) befestigbar ist, der durch eine Bohrung (8b) des Verbindungsteils (8) und eine Bohrung (4a, 5a) des Vorsprungs (4, 5) des benachbarten Rohres (1a) bzw. Deckels gesteckt wird.

- 1 -

Rudolf Schaefer

Brauerstr. 35

4100 Duisburg 1

Spannverbindung für Rohre

Die Erfindung betrifft eine Spannverbindung zur stirnseitigen Befestigung von Rohren aneinander.

Um Rohre stirnseitig miteinander zu verbinden, ist es
bekannt, sie entweder aneinanderzuschweißen oder aber
die Rohre mit Flanschen zu versehen, die aneinandergeschraubt werden. Diese üblichen Befestigungsarten sind
aufwendig und erfordern Fachkräfte. Die Verbindungen
sind wenig elastisch und nicht beweglich, so daß Bewegungen als auch Ausdehnungen kaum aufnehmbar sind. Ferner
ist ein Lösen dieser Verbindungen mit einem hohen Arbeitsaufwand verbunden.

Aufgabe der Erfindung ist es, eine einfach handhabbare,
lösbare Verbindung für Rohre zu schaffen.

Diese Aufgabe wird erfindungsgemäß dadurch gelöst, daß
an dem Rohrende oder Deckel außen mindestens ein Vorsprung befestigt oder angeformt ist, an dem ein Verbindungsteil angelenkt ist, das an einem entsprechenden
Vorsprung des benachbarten Rohres oder Deckels durch
einen Bolzen (Exzenterbolzen) befestigbar ist, der durch

34 198
HC/Be

- 2 -

eine Bohrung des Verbindungsteils und eine Bohrung des
Vorsprungs des benachbarten Rohres bzw. Deckels steckbar
ist, und daß zur Lageveränderung des Verbindungsteils
gegenüber dem Vorsprung des benachbarten Rohres bzw.
Deckels der Bolzen einen exzentrischen Bereich aufweist,
der während einem Verdrehen des Bolzens um seine Längsachse an einer der Bohrungswandungen zur Anlage gelangt.

Eine solch einfache Verbindung ist preisgünstig und leicht
handhabbar, da sie kein Schweißen oder Schrauben erfordert
und von Laien betätigt werden kann. Die Verbindung ist
lösbar und immer wieder verwendbar, wobei ständig eine
hohe Dichtigkeit und Sicherheit erreicht wird. Die Verbindungsteile lassen eine ausreichende Beweglichkeit zu,
so daß Temperaturschwankungen, Druckänderungen und Erdbewegungen axial, radial als auch um die Verbindungsstelle
schwenkend aufgenommen werden können. Die Verbindung übt
eine zentrierende Wirkung der Rohre zueinander aus und
läßt eine Veränderung der Spannkraft durch Drehverstellen
der Bolzen zu. Durch unterschiedliche Bolzen mit verschieden großen Exzentern als auch durch ein nachträgliches Bearbeiten der Exzenter können große Unterschiede
in den Spannkräften wahlweise erreicht werden.

Besonders einfach ist der Bolzen dann herstellbar, wenn
der exzentrische Bereich des Bolzens von einem Vorsprung
oder Nocken gebildet wird. Vorzugsweise wird vorgeschlagen, daß die Bohrungen in den Vorsprüngen den gleichen
Durchmesser aufweisen.

Eine besonders einfache Ausführung wird dadurch geschaffen,
daß die Bohrungen in den Vorsprüngen einen größeren Durchmesser aufweisen als die den Bolzen aufnehmende Bohrung

- 3 -

des Verbindungsteils, und daß der exzentrische Bereich
des Bolzens in einer Bohrung in einem Vorsprung einliegt.
Hierzu wird auch vorgeschlagen, daß die Vorsprünge von
Flachmaterial,insbesondere frei vorragenden Laschen, gebildet werden. Ferner können die Vorsprünge radial vorragen.

Besonders hohe Kräfte sind dann erzeugbar, wenn der Bolzen durch zwei zueinander parallel angeordnete Vorsprünge
steckbar ist. Dabei kann das Verbindungsteil zwischen
den Vorsprüngen einliegen. Ferner wird vorgeschlagen, daß
das Verbindungsteil ein Flachteil  ist, das vorzugsweise
achsparallel zu den Rohren liegt.

Eine besonders große Spannbewegung der Rohre zueinander
wird dadurch geschaffen, daß die Anlenkstelle des Verbindungsteils auch von einem Bolzen (Scharnierbolzen)
gebildet wird. Dabei kann dieser zweite Bolzen auch einen
exzentrischen Bereich, insbesondere einen Vorsprung oder
Nocken aufweisen. Vorzugsweise wird vorgeschlagen, daß
die Bohrungen der Vorsprünge und des Verbindungsteils
zueinander parallel verlaufen.

Eine sichere Kraftübertragung wird dadurch erreicht, daß
der Durchmesser der den Bolzen aufnehmenden Bohrung(en)
im Verbindungsteil gleich oder wenig größer als der Durchmesser des Bolzens ist. Ferner kann hierzu der Durchmesser der Bohrungen in den Vorsprüngen gleich oder wenig
größer als der Durchmesser des Bolzens einschließlich
dessen exzentrischen Teils sein.

Eine Spannkraftausübung des Bolzens auf zwei nebeneinanderliegende Vorsprünge eines Rohres wird dadurch erreicht,

- 4 -

daß der Bolzen auf der gleichen Seite zwei Exzenter im
axialen Abstand aufweist. Dabei kann das Verbindungsteil
in der Bohrungswandung eine Ausnehmung zum Durchstecken
des zweiten Exzenters aufweisen.

Der Bolzen läßt sich ohne Werkzeuge handhaben, wenn der
Bolzen an einem Ende einen Griff aufweist.

Eine Sicherung des Bolzens in der eingesteckten und verdrehten Stellung wird dadurch erreicht, daß mindestens
ein Bolzen an dem in die Bohrungen einzusteckenden Ende
einen radial über den Bohrungsdurchmesser vorspringenden
Anschlag (Vorsprung, Nocken) aufweist, der durch in den
Bohrungswandungen angeordnete achsparallele Längsnuten
einführbar ist und nach Verdrehen des Bolzens am unteren
Bohrungsrand anliegt. Dabei kann am Bohrungsrand eine
Sperrfeder befestigt sein, durch die der Anschlag in der
Spannstellung des Bolzens fixierbar ist.

Eine Spannkraft axial oder achsparallel zu den Rohrlängsachsen wird dadurch erreicht, daß die Bohrungen und Bolzen tangential oder parallel zu einer Tangente zu dem
Rohr angeordnet sind. Eine zu weite Bewegung des Bolzens
in Einsteckrichtung wird dadurch verhindert, daß ein
vorstehender Rand oder Kragen am oberen Ende des Bolzens
vorgesehen ist.

Zwei Ausführungsbeispiele der Erfindung sind in den Zeichnungen dargestellt und werden im folgenden näher beschrieben. Es zeigen:

Fig. 1          eine perspektivische Ansicht eines ersten
                Ausführungsbeispiels;

0046223

- 5 -

Fig. 2            eine Ansicht entsprechend Fig. 1 mit herausgezogenem Verbindungsteil;

Fig. 3            einen zu den Rohrachsen parallelen Schnitt
                  durch die Verbindung im noch nicht verspannten Zustand mit zwei Exzenterbolzen;

Fig. 4            einen Schnitt entsprechend Fig. 3 im verspannten Zustand;

Fig. 5            eine endseitige Draufsicht auf ein Rohr mit
                  Vorsprüngen bzw. Laschen auf diametral
                  gegenüberliegenden Seiten;

Fig. 6            eine perspektivische Ansicht zweier geschnittener Rohre mit Vorsprüngen für eine
                  Spannverbindung.

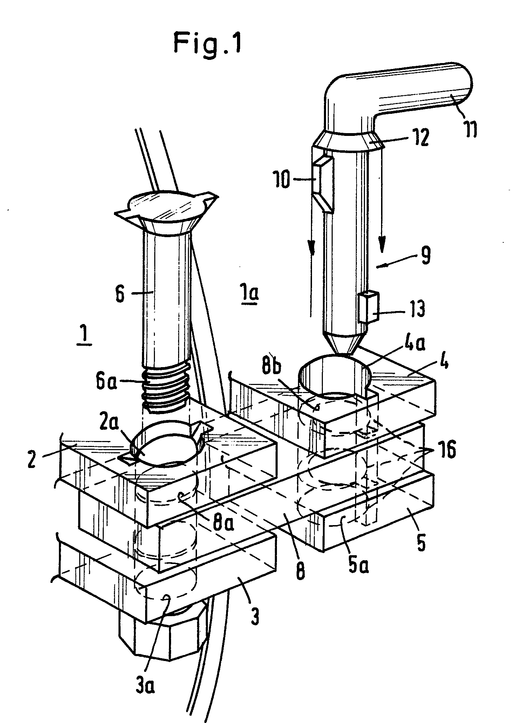

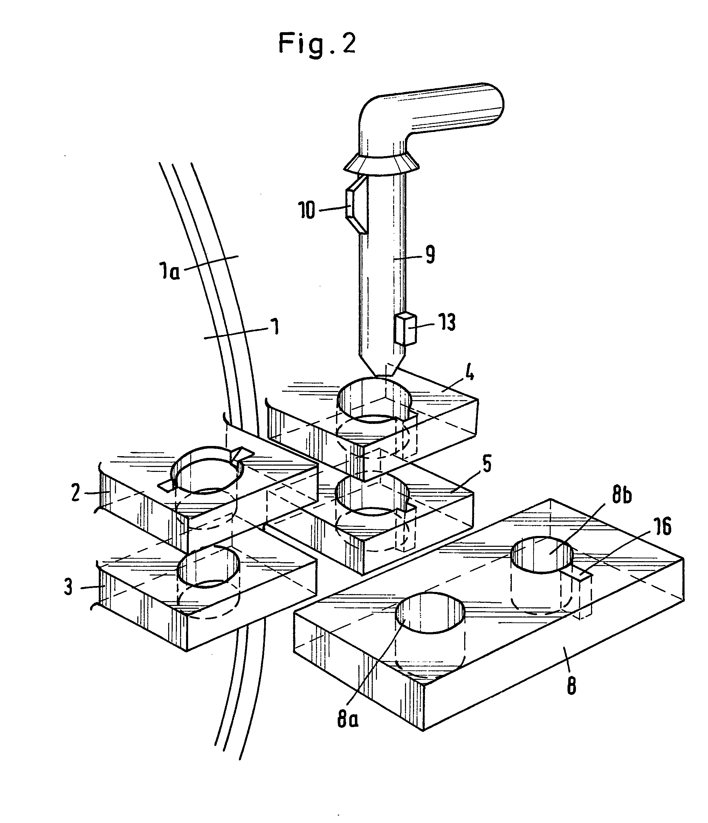

In dem Ausführungsbeispiel nach den Figuren 1 und 2 ist
an einem ersten Rohr 1 in dessen Endbereich an der Außenwandung etwa radial vorstehend ein quadratisches
Flachteil 2 mit einer Schmalseite angeschweißt oder angeformt, das mittig und tangential bzw. parallel zur Rohrtangente eine Bohrung 2a aufweist. In einem Abstand und
parallel zum Flachteil       2 mit dessen Außenseiten
fluchtend ist an der Rohrwandung ein zweites Flachteil  3 angeschweißt oder angeformt, wobei der Abstand
wenig größer ist als die Stärke der Flachteile.
In gleicher Weise sind an einem stirnseitig angesetzten
zweiten Rohr Flachteile       4 und 5 gleicher Abmessungen
zueinander parallel und mit den Flachseiten zu den
Flachteilen  2 und 3 fluchtend angeschweißt oder angeformt. Das Flachteil        3 weist eine mit der Bohrung 2a fluchtende mittige Bohrung 3a auf, und die Flachteile 4 und 5 weisen zueinander fluchtende mittige Bohrungen 4a und 5a auf.

In den Bohrungen 2a und 3a liegt ein Scharnierbolzen
gleichen Durchmessers ein, der mit seinem Kopf in dem
Flachteil 2 versenkt ist und dessen unten aus dem
Flachteil 3 vorragendes Ende ein Gewinde 6a trägt,
auf dem eine Mutter 7 aufgeschraubt ist. Zwischen den
Flachteilen 2 bis 5 liegt ein aus einem Flacheisen
bestehendes Verbindungsteil 8 parallel zu den Flachteilen ein, dessen Stärke etwa der der Flachteile
entspricht. Das Verbindungsteil 8 besitzt eine mit den
Bohrungen 2a und 3a fluchtende Bohrung 8a, durch die das
Verbindungsteil 8 auf dem Scharnierbolzen 6 drehbar gelagert ist.

Das Verbindungsteil 8 besitzt auf der der Bohrung 8a gegenüberliegenden Seite eine zweite Bohrung 8b, die im Bereich
der Bohrungen 4a, 5b angeordnet ist, parallel zu diesen
liegt und einen geringeren Durchmesser als diese aufweist.
In den Bohrungen 4a, 5a und 8b liegt ein zylindrischer
Exzenterbolzen 9 ein, dessen Durchmesser wenig geringer
ist als der der zweiten Bohrung 8b. Der Exzenterbolzen 9
weist als Exzenter eine vorspringende Nase 10 auf, die
während einer Verdrehung des Bolzens 9 entlang der Wandung der Bohrung 4a reibt und hierdurch die Lage des Verbindungsteils 8 gegenüber der Flachteile 4 und 5
verändert. Da das Verbindungsteil 8 an den Flachteilen 2 und 3 angelenkt ist, führt ein Verdrehen des
Exzenterbolzens 9 um seine Längsachse zu einer Veränderung
des Abstandes der Flachteile 2 und 3 zu den
Flachteilen 4 und 5 und damit zu einer Veränderung des

0046223

- 7 -

Abstandes der Stirnseiten der Rohre 1 und 1a.

Der Exzenterbolzen 9 kann im Bereich der Bohrung 5a auch eine Nase oder einen anders geformten Exzenter tragen, um auch die Bohrung 5a zur Erzeugung von Spannkräften heranzuziehen. In diesem Fall muß die Bohrung 8b des Verbindungsteils 8 in der Wandung einen Längsschlitz mit den Abmessungen des Exzenters tragen, um ein Hindurchstecken des Exzenterbolzens durch die Bohrung 8b zu ermöglichen.

Der Exzenterbolzen 9 besitzt als Griff 11 am oberen Ende einen abgewinkelten Teil und zwischen dem Griff 11 und der Nase 10 einen Kragen 12, der auf der Oberseite des Flacheisenstücks 4 zur Anlage gelangt, um eine genaue Positionierung und ein Beibehalten der axialen Stellung des Exzenterbolzens zu erreichen. An dem dem Griff 11 gegenüberliegenden Ende des Exzenterbolzens 9 weist dieser an dem unten aus der Bohrung 5a herausragenden Teil einen vorspringenden Nocken 13 auf, der als Feder über den Rand der Bohrung 5a vorsteht und damit ein Herausziehen des Exzenterbolzens 9 verhindert, solange dieser nicht in einer Stellung steht, in der der Nocken 13 mit achsparallelen Nuten in Wandungen der Bohrungen 4a, 8b und 5a übereinstimmt.

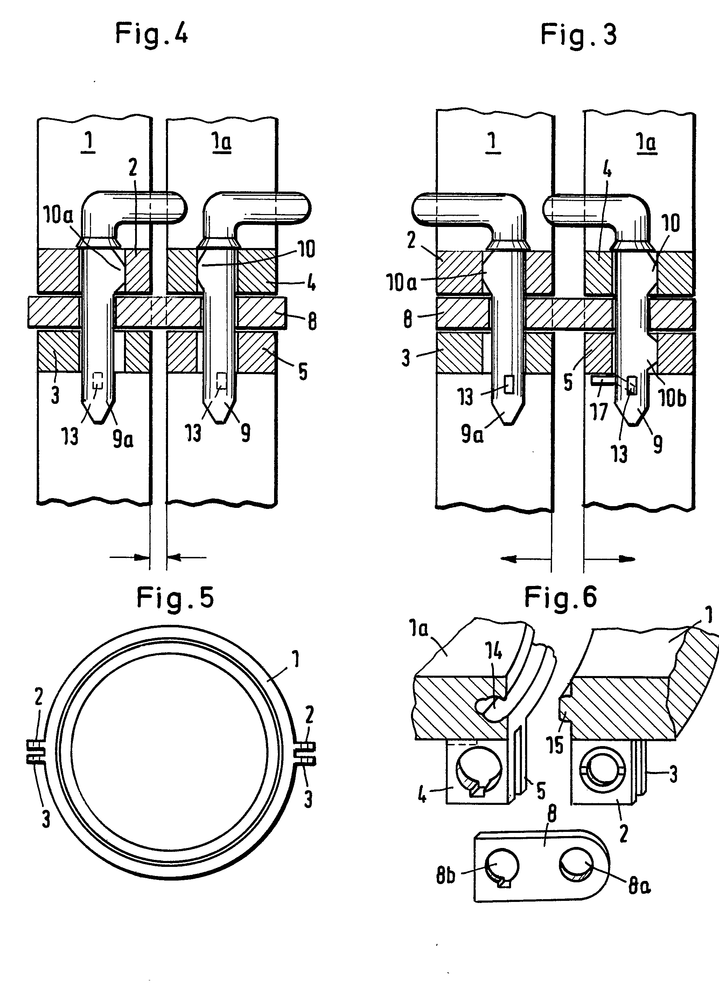

Das in den Figuren 3 und 4 gezeigte Ausführungsbeispiel unterscheidet sich von dem in den Figuren 1 und 2 nur dadurch, daß statt des Scharnierbolzens 6 ein Exzenterbolzen 9a in die Flacheisenstücke 2 und 3 und das Verbindungsteil 8 eingesetzt ist. Hierzu muß die Bohrung 8a des Verbindungsteils 8 gleich groß ausgeführt sein wie die Bohrung 8b. Durch einen zweiten Exzenterbolzen 9a läßt sich die Bewegungsstrecke, um die die beiden Rohre verspannt werden können, verdoppeln.

- 8 -

Wie in Fig. 6 dargestellt, können die beiden Stirnseiten
der Rohre ineinandergreifen, wobei eine Stirnseite eine
Ringnut 14 und die Stirnseite des daran zu befestigenden
Rohres eine ringförmige Feder 15 trägt, deren Breite
wenig geringer ist als die Breite der Nut. Die Nut 14
ist in diesem Ausführungsbeispiel tiefer als die Höhe der
Feder 15, so daß in die Nut eine Weichgummischnur eingelegt werden kann, die durch die Feder 15 angepreßt wird.

Das Verbindungsteil 8 ist in dem Ausführungsbeispiel nach
Fig. 6 an einem Ende auf der Außenseite abgerundet, so
daß eine größere Bewegungsmöglichkeit der Rohre zueinander
besteht. Diese größere Bewegungsmöglichkeit ist auch dann
von Vorteil, wenn statt eines der beiden Rohre ein Deckel
oder eine Abschlußwand angeordnet wird, um ein Rohr zu
verschließen. So kann diese Wand einen Kesselwagen stirnseitig abschließen.

# COHAUSZ & FLORACK

### PATENTANWALTSBÜRO

SCHUMANNSTR. 97 · D-4000 DÜSSELDORF

Telefon: (02 11) 68 33 46          Telex: 0858 6513 cop d

0046223

---

PATENTANWÄLTE:

Dipl.-Ing. W. COHAUSZ · Dipl.-Ing. R. KNAUF · Dr.-Ing., Dipl.-Wirtsch.-Ing. A. GERBER · Dipl.-Ing. H. B. COHAUSZ

---

- 9 -

11.8.80

## Ansprüche

1. Spannverbindung zur stirnseitigen Befestigung eines Rohres oder Deckels an einem Rohr, d a d u r c h g e k e n n z e i c h n e t , daß an dem Rohrende oder Deckel außen mindestens ein Vorsprung (2, 3) befestigt oder angeformt ist, an dem ein Verbindungsteil (8) angelenkt ist, das an einem entsprechenden Vorsprung (4, 5) des benachbarten Rohres (1a) oder Deckels durch einen Bolzen (Exzenterbolzen) (9) befestigbar ist, der durch eine Bohrung (8b) des Verbindungsteils (8) und eine Bohrung (4a, 5a) des Vorsprungs (4, 5) des benachbarten Rohres (1a) bzw. Deckels steckbar ist, und daß zur Lageveränderung des Verbindungsteils (8) gegenüber dem Vorsprung (4, 5) des benachbarten Rohres (1a) bzw. Deckels der Bolzen (9) einen exzentrischen Bereich (10) aufweist, der während einem Verdrehen des Bolzens (9) um seine Längsachse an einer der Bohrungswandungen zur Anlage gelangt.

2. Spannverbindung nach Anspruch 1, d a d u r c h g e - k e n n z e i c h n e t , daß der exzentrische Bereich (10) des Bolzens (9) von einem Vorsprung oder Nocken gebildet wird.

3. Spannverbindung nach Anspruch 1 oder 2, d a d u r c h

34 198
HC/Be

gekennzeichnet, daß die Bohrungen
(2a-5a) in den Vorsprüngen (2-5) den gleichen Durchmesser aufweisen.

4. Spannverbindung nach Anspruch 3, dadurch
gekennzeichnet, daß die Bohrungen
(2a-5a) in den Vorsprüngen (2-5) einen größeren Durchmesser aufweisen als die den Bolzen (9) aufnehmende
Bohrung (8b) des Verbindungsteils (8), und daß der
exzentrische Bereich (10) des Bolzens (9) in einer
Bohrung (4a) in einem Vorsprung (4) einliegt.

5. Spannverbindung nach einem der Ansprüche 1 bis 4,
dadurch gekennzeichnet, daß
die Vorsprünge (2-5) von Flachmaterial, insbesondere
.frei vorragenden Laschen, gebildet werden.

6. Spannverbindung nach einem der Ansprüche 1 bis 5,
dadurch gekennzeichnet, daß
die Vorsprünge (2-5) etwa radial vorragen.

7. Spannverbindung nach einem der Ansprüche 1 bis 6,
dadurch gekennzeichnet, daß
der Bolzen (9) durch zwei zueinander parallel angeordnete Vorsprünge (4, 5) steckbar ist.

8. Spannverbindung nach Anspruch 7, dadurch
gekennzeichnet, daß das Verbindungsteil (8) zwischen den Vorsprüngen (2-5) einliegt.

9. Spannverbindung nach einem der Ansprüche 1 bis 8,
dadurch gekennzeichnet, daß
das Verbindungsteil (8) ein Flachteil ist, das

- 11 -

vorzugsweise achsparallel zu dem(n) Rohr(en) (1, 1a)
liegt.

10. Spannverbindung nach einem der Ansprüche 1 bis 9,
d a d u r c h   g e k e n n z e i c h n e t ,   daß
die Anlenkstelle des Verbindungsteils (8) auch von
einem Bolzen (Scharnierbolzen) (9a) gebildet wird.

11. Spannverbindung nach Anspruch 10,   d a d u r c h
g e k e n n z e i c h n e t ,   daß dieser zweite
Bolzen (9a) auch einen exzentrischen Bereich (10a),
insbesondere einen Vorsprung oder Nocken aufweist.

12. Spannverbindung nach einem der Ansprüche 1 bis 11,
d a d u r c h   g e k e n n z e i c h n e t ,   daß
die Bohrungen (2a-5a, 8a, 8b) der Vorsprünge (2-5)
und des Verbindungsteils (8) zueinander parallel
verlaufen.

13. Spannverbindung nach einem der Ansprüche 1 bis 12,
d a d u r c h   g e k e n n z e i c h n e t ,   daß
der Durchmesser der den Bolzen aufnehmenden Bohrung(en)
(8b) im Verbindungsteil (8) gleich oder wenig größer
als der Durchmesser des Bolzens (9) ist.

14. Spannverbindung nach einem der Ansprüche 1 bis 13,
d a d u r c h   g e k e n n z e i c h n e t ,   daß
der Durchmesser der Bohrungen (2a-5a) in den Vorsprüngen (2-5) gleich oder wenig größer als der
Durchmesser des Bolzens (9) einschließlich dessen
exzentrischen Teils (10) ist.

15. Spannverbindung nach einem der Ansprüche 7 bis 14,

- 4 -

dadurch gekennzeichnet, daß
der Bolzen (9) auf der gleichen Seite zwei Exzenter
(10, 10b) im axialen Abstand aufweist.

16. Spannverbindung nach Anspruch 15, dadurch
gekennzeichnet, daß das Verbindungsteil (8) in der Bohrungswandung eine Ausnehmung zum
Durchstecken des zweiten Exzenters (10b) aufweist.

17. Spannverbindung nach einem der Ansprüche 1 bis 16,
dadurch gekennzeichnet, daß
der Bolzen (9) an einem Ende einen Griff (11) aufweist.

18. Spannverbindung nach einem der Ansprüche 1 bis 17,
dadurch gekennzeichnet, daß
mindestens ein Bolzen (9) an dem in die Bohrungen
(4a, 5a) einzusteckenden Ende einen radial über den
Bohrungsdurchmesser vorspringenden Anschlag (Vorsprung, Nocken) (13) aufweist, der durch in den
Bohrungswandungen angeordnete achsparallele Längsnuten (16) einführbar ist und nach Verdrehen des
Bolzens am unteren Bohrungsrand anliegt.

19. Spannverbindung nach Anspruch 18, dadurch
gekennzeichnet, daß am Bohrungsrand
eine Sperrfeder (17) befestigt ist, durch die der
Anschlag (13) in der Spannstellung des Bolzens (9)
fixierbar ist.

20. Spannverbindung nach einem der Ansprüche 1 bis 19,
dadurch gekennzeichnet, daß
die Bohrungen (2a-5a, 8a, 8b) und Bolzen (9, 9a)
tangential oder parallel zu einer Tangente zu dem
Rohr (1, 1a) angeordnet sind.

- 13 -

21. Spannverbindung nach einem der Ansprüche 1 bis 20, d a d u r c h   g e k e n n z e i c h n e t , daß ein vorstehender Rand oder Kragen (12) am oberen Ende des Bolzens (9) vorgesehen ist.

0046223

## Fig.1

Fig.2

Fig.4

Fig.3

Fig.5

Fig.6

**Europäisches Patentamt**

**EUROPÄISCHER RECHERCHENBERICHT**

0046223
Nummer der Anmeldung

EP 81105968.2

## EINSCHLÄGIGE DOKUMENTE

| Kategorie | Kennzeichnung des Dokuments mit Angabe, soweit erforderlich, der maßgeblichen Teile | betrifft Anspruch |
|-----------|-----------------------------------------------------------------------------------|-------------------|
| A | DE - B - 1 625 405 (MECANO SIMMONDS) <br><br> * Gesamt * <br><br> -- | 1 |
| A | GB - A - 1 560 234 (GEBRÜDER HAPPICH) <br><br> * Gesamt * <br><br> & DE-A-2 623 602 <br><br> ---- | 1 |

**KLASSIFIKATION DER ANMELDUNG (Int. Cl.)**

F 16 L 37/00

F 16 B  2/00

F 16 J 13/00

**RECHERCHIERTE SACHGEBIETE (Int. Cl.)**

F 16 L 23/00

F 16 L 37/00

F 16 B  2/00

F 16 B  7/00

F 16 B 17/00

F 16 J 13/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---------------------------------------------------------------------------|

| Recherchenort | Abschlußdatum der Recherche | Prüfer |
|---------------|----------------------------|--------|
| WIEN | 03-11-1981 | SCHUGANICH |

EPA form 1503.1   06.78